# EUROPÄISCHE PATENTSCHRIFT

(11) **EP 0 923 442 B1**
(45) Veröffentlichungstag und Bekanntmachung des Hinweises auf die Patenterteilung: **13.03.2002**
(21) Anmeldenummer: 97944764.6
(22) Anmeldetag: 18.08.1997
(51) Int. Cl.: B29C 44/12, B29C 44/34

(54) **VERFAHREN ZUR HERSTELLUNG VON VERBUNDKÖRPERN AUS KUNSTSTOFF**
PROCESS FOR MANUFACTURING COMPOSITE BODIES MADE OF PLASTICS
PROCEDE POUR LA FABRICATION DE CORPS COMPOSITES EN PLASTIQUE

(30) Priorität: 20.08.1996 DE 19633467; 29.10.1996 DE 19644823
(43) Veröffentlichungstag der Anmeldung: 23.06.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: ELSNER, Peter, D-76327 Pfinztal (DE); GEISSLER, Adam, D-76689 Neuthard (DE); EMMERICH, Rudolf, D-76646 Bruchsal (DE); ZÜRN, Michael, D-71065 Sindelfingen (DE); EYERER, Peter, D-76228 Karlsruhe (DE); ZIEGLER, Lars, D-71229 Leonberg (DE); ZIEGLER, Maik, D-71287 Weissach (DE)
(86) Internationale Anmeldenummer: EP9704490
(87) Internationale Veröffentlichungsnummer: WO9807555

(56) Entgegenhaltungen:
- EP-A- 0 705 682
- WO-A-90/08642
- DE-A- 3 531 606
- GB-A- 1 491 532
- US-A- 3 816 574
- US-A- 3 902 940

## Beschreibung

Die Erfindung betrifft ein Verfahren zur Herstellung von wenigstens zweischichtigen Verbundkörpern mit einem ganz oder überwiegend aus Kunststoff bestehenden Trägermaterial und einer mit dieser fest verbundenen, porösen Schicht aus einem geschäumten Polymer, indem ein mit einem Treibmittel versetztes Polymer mit Mikrowellen-Energie bis auf die Schmelztemperatur des Polymers unter gleichzeitigem Zersetzen oder Verdampfen des Treibmittels erwärmt und der entstehende Polymerschaum mit dem Trägermaterial verbunden wird.

Verbundkörper der vorgenannten Art finden in der Praxis vielfache Verwendung, beispielsweise als Wärme- und Schalldämmaterial im Hoch- und Innenausbau, im KFZ-Karosseriebau etc. Soweit solche Verbundkörper als Grundmaterial für Innenverkleidungsteile in Kraftfahrzeugen eingesetzt werden, wird neben der Schalldämmwirkung insbesondere die Polsterwirkung der porösen Schicht aus sicherheitstechnischen Gründen genutzt. Ein weiteres Anwendungsgebiet sind schall- und wärmedämmende Verkleidungen für Maschinen, thermische Isolationsbehälter etc.

Üblicherweise werden das Trägermaterial und das aufgeschäumte Polymer getrennt voneinander in der jeweils gewünschten Form hergestellt und miteinander verklebt. Dies geschieht in der Regel durch Lösungsmittel, um durch oberflächiges Anlösen des Trägermaterials und des aufgeschäumten Polymers eine feste Verbindung zu erhalten. Sofern Klebstoffe eingesetzt werden, enthalten auch diese in der Regel Lösungsmittel. Dieses Verfahren ist aufwendig und bringt wegen der Verwendung von Lösungsmitteln Arbeits- und Umweltbelastungen mit sich.

Die WO 90/08642 beschreibt ein Verfahren zur Herstellung von Formkörpern aus expandierbaren Polymerpellets unter Verwendung eines mikrowellenabsorbierenden Mediums, indem die Polymerpellets zusammen mit dem MW-absorbierenden Medium, wie Wasser, in eine MW-durchlässige Form eingebracht, diese verschlossen und die Polymerpellets mittels MW-Energie expandiert und miteinander verschmolzen werden. Eine Verfahrensvariante sieht das Kaschieren eines auf diese Weise erzeugten Formkörpers mittels eines die Polymerpellets umhüllend in die Form eingebrachten Liners vor, der jedoch lediglich eine formschlüssige Verbindung mit den expandierten Polymerpellets eingeht.

Aus der EP 0 705 682 A1 ist weiterhin ein Verfahren zum Verbinden von wenigstens zwei thermoplastischen Polymeren bekannt, wobei wenigstens eines der Polymere zumindest an der Grenzfläche zum anderen Polymer mit einem MW-absorbierenden Medium beschichtet wird, so daß die Polymere unter Kontakt ihrer Grenzflächen in einem MW-Feld durch Wärmeübertragung des MW-absorbierenden Mediums miteinander verschweißt werden.

Der Erfindung liegt die Aufgabe zugrunde, ein Verfahren zur Herstellung von Verbundkörpern des vorgenannten Aufbaus vorzuschlagen, bei dem lösungsmittel- und klebstofffrei gearbeitet werden kann und eine Zugabe von Additiven, wie MW-absorbierenden Medien, nicht erforderlich ist.

Diese Aufgabe wird erfindungsgemäß dadurch gelöst, daß für das Trägermaterial ein mikrowellendurchlässiges Polymer verwendet wird, während das mit dem Treibmittel versetzte Polymer mikrowellenabsorbierende Eigenschaften aufweist, daß das mit dem Treibmittel versetzte Polymer ausschließlich durch Mikrowellen-Energie aufgeschäumt und zugleich oder anschließend mittels Mikrowellen-Energie bis zum Anschmelzen des Trägermaterials an seiner Grenzschicht zum aufgeschäumten Polymer durch Wärmeleitung aus diesem erhitzt wird, so daß nach dem Abkühlen ein fester Verbund von Trägermaterial und geschäumtem Polymer erhalten wird.

Bei dem erfindungsgemäßen Verfahren wird MW-Energie genutzt, um einerseits den Schäumprozeß in der porösen Schicht durchzuführen, andererseits die Verbindung zwischen dem aufgeschäumten Polymer der porösen Schicht und dem Polymer des Trägermaterials herzustellen, ohne daß für die Verbindung dieser beiden Materialien eine weitere, insbesondere lösungsmittelhaltige Komponente oder gar reines Lösungsmittel eingesetzt werden muß. Es entsteht eine homogene und fremdstofffreie Verbindung zwischen den beiden an dem Verbund beteiligten Polymeren.

Bei dem erfindungsgemäßen Verfahren kann die poröse Schicht durch Aufschäumen des treibmittelhaltigen Polymers mittels MW getrennt in Form eines Schaumkörpers oder einzelner Schaumstoffperlen hergestellt und anschließend wiederum durch MW mit dem Trägermaterial verbunden werden, vorzugsweise wird jedoch das treibmittelhaltige Polymer, z.B. als Extrudat, lose auf das Trägermaterial aufgebracht und -gegebenenfalls unter gleichzeitigem Formen- aufgeschäumt und zugleich mit dem Polymer des Trägermaterials verbunden.

Es ist zwar bekannt (GB 2 182 599 A), partikelförmige Polymere durch MW-Energie zu einer Art Sinterkörper zu verschmelzen. In diesem Zusammenhang wird ferner vorgeschlagen, das Polymer mit Treibmittel zu versetzen und die Polymerpartikel durch die MW-Energie nicht nur miteinander zu verschmelzen, sondern zugleich auch aufzutreiben. Ebenso ist es bekannt, MW-Energie zur Erzeugung der Schweißtemperatur beim Verbinden von Folien im Wege des Punktschweißens zu verwenden.

Mit der Erfindung wird ein anderer Weg beschritten, indem das Trägermaterial durch die MW-Strahlen nicht unmittelbar beeinflußt wird, sondern nur das aufzuschäumende Polymer, und das Verschweißen bzw. Verschmelzen von poröser Schicht und Trägermaterial nur durch Ableitung der hierfür notwendigen Wärme aus dem aufgeheizten Polymer in die Grenzschicht des Trägermaterials bereitgestellt wird.

Vorzugsweise wird ein Treibmittel verwendet, dessen Zersetzungs- oder Verdampfungstemperatur oberhalb der Schmelztemperatur des verwendeten Polymers für die poröse Schicht liegt, so daß bei Aufheizen bis auf diese Temperatur sichergestellt ist, daß sich nicht nur das Treibmittel zersetzt und das Polymer aufschäumt, sondern dieses auch einen ausreichenden Wärmeinhalt besitzt, um selbst durch die absorbierte MW-Energie aufzuschmelzen und zudem durch Wärmeleitung das Polymer des Trägermaterials anzuschmelzen.

Eine andere Lösung der Erfindungsaufgabe besteht darin, daß für das Trägermaterial ein im wesentlichen mikrowellendurchlässiges Polymer und für die poröse Schicht ein Polymer in Form von Partikeln mit mikrowellenabsorbierenden Eigenschaften verwendet wird, daß der lose Verbund von Trägermaterial und partikelförmigem Polymer mit Mikrowellen-Energie bis zum unmittelbaren Verschmelzen der Partikel untereinander zumindest an ihrer Oberfläche sowie bis zum Anschmelzen des Trägermaterials an seiner Grenzschicht zum partikelförmigen Polymer durch Wärmeleitung aus diesem bestrahlt wird, so daß nach dem Abkühlen ein fester Verbund von Trägermaterial und poröser Schicht aus untereinander verbundenen Polymerpartikeln erhalten wird.

Das partikelförmige Polymer kann in Form von aufgeschäumten Perlen eingesetzt werden. Statt dessen kann vorgesehen sein, daß das Polymer in Partikelform mit einem Treibmittel versetzt ist und bei der Bestrahlung mit Mikrowellenenergie expandiert wird. Ebenso ist es möglich, nur vorgeschäumte Partikel zu verwenden und diese bei der MW-Bestrahlung vollständig zu expandieren.

Für das Trägermaterial und die poröse Schicht können auch gleiche Polymere verwendet werden, wodurch nicht nur ein einwandfreier Verbund, sondern auch ein sortenreines Endprodukt erhalten wird, das wiederum problemlos zu entsorgen ist. Hierbei kann das verwendete Polymer im wesentlichen mikrowellendurchlässig sein und lediglich das Treibmittel des geschäumten Polymers MW-absorbierende Eigenschaften aufweisen.

In weiterhin vorteilhafter Ausführung ist vorgesehen, daß beim Bestrahlen mit MW-Energie an freien Oberflächen des geschäumten Polymers eine geschlossene Haut (Integralhaut) gebildet wird.

Die Integralhaut an der freien Oberfläche des geschäumten Polymers bildet entweder die endgültige Oberflächenstruktur des Verbundkörpers oder ermöglicht das einwandfreie Aufbringen einer weiteren Schicht, z.B. einer Folie, mit bestimmten physikalischen, dekorativen Eigenschaften od. dgl.

Gemäß einem weiteren Merkmal der Erfindung ist vorgesehen, daß die freie Oberfläche des Polymers der porösen Schicht bereichsweise mit einer mikrowellenundurchlässigen Schicht abgedeckt wird, wobei diese Schicht auch einen variierenden MW-Absorptionskoeffizient in der Ebene der Schicht aufweisen kann.

Durch die MW-undurchlässige Schicht werden die darunterliegenden Bereiche des Polymers gegenüber den MW-Strahlen abgeschattet, so daß das Polymer in diesen Bereichen nicht aufgeschäumt wird. Es entsteht also eine Struktur aus massiven und geschäumten Bereichen oder -sofern das Polymer in Granulatform aufgegeben wird- von nur gesinterter und zusätzlicher aufgeschäumter Struktur. Durch einen variierenden, insbesondere kontinuierlich sich ändernden MW-Absorptionskoeffizient lassen sich Schaumstrukturen mit gleichmäßig abnehmendem bzw. zunehmendem Hohlraumvolumen erzeugen.

Selbstverständlich lassen sich mit dem erfindungsgemäßen Verfahren auch dreischichtige Verbundkörper herstellen, indem auf die freie Oberfläche des Polymers eine weitere Schicht aus einem mikrowellendurchlässigen Polymer aufgebracht wird und dieses in gleicher Weise mit dem aufzuschäumenden Polymer verbunden wird, wie bei einem nur zweischichtigen Verbundkörper. Die Deckschicht kann insbesondere eine Folie sein.

Je nach Art des herzustellenden Verbundkörpers kann das Trägermaterial platten- oder folienförmig sein, vorzugsweise besteht es aus GMT. In weiterhin bevorzugter Ausführung des Verfahrens wird der Verbundkörper während der MW-Behandlung zugleich unter Druck geformt. Stattdessen kann aber auch vorgesehen sein, daß das Trägermaterial mit dem treibmittelhaltigen Polymer und gegebenenfalls einer Deckschicht unter Druck vorgeformt und anschließend der lose Verbund mit Mikrowellen bestrahlt wird.

Das Trägermaterial kann auch ein Hohlkörper sein und es kann dieser mit dem treibmittelhaltigen Polymer teilweise gefüllt und dieses anschließend durch Mikrowellenenergie aufgeschäumt werden. Ein solches Verfahren bietet sich insbesondere bei Sandwich-Verkleidungen, bei Behältern etc. an.

Nachstehend ist die Erfindung anhand einiger in der Zeichnung wiedergegebener Ausführungsbeispiele beschrieben. In der Zeichnung ist jeweils im schematischen Schnitt ein Preßformwerkzeug zur Herstellung eines geformtes Verbundkörpers gezeigt, und zwar in den
- Figuren 1 und 2: durch Formen eines Materialverbundes;
- Figuren 3 und 4: durch Vorformen und anschließendes Schäumen;
- Figuren 5 bis 7: durch Vorformen des Trägermaterials und anschließendes Formen des Verbundkörpers.

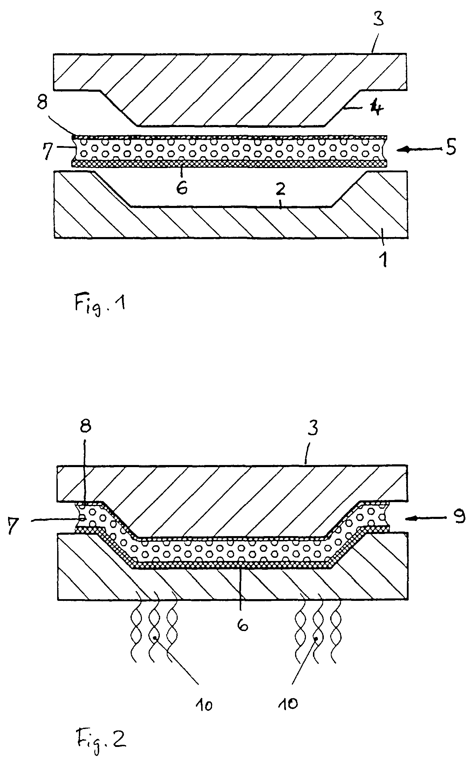

Den in der Zeichnung wiedergegebenen Ausführungsbeispielen ist jeweils derselbe Verbundkörper zugrundegelegt, der in einem weitgehend gleichen Preßformwerkzeug, bestehend aus einem Unterwerkzeug 1 mit einer Formmulde 2 und einem Oberwerkzeug 3 mit einem entsprechenden Formprofil 4 besteht. Bei dem Ausführungsbeispiel gemäß Figur 1 und 2 wird ein vorgeschichteter Materialverbund 5 zwischen die Formwerkzeuge 1 und 3 eingebracht. Der Materialverbund besteht aus einem plattenförmigen Trägermaterial 6, z.B. aus GMT, das im endgültigen Zustand des Verbundkörpers das tragende Teil bildet. Weiterhin weist der Verbund 5 eine poröse Schicht 7 aus einem aufgeschäumten Polymer und eine Deckschicht 8 in Form einer Folie, gleichfalls aus einem Polymer, auf. Vorzugsweise bestehen die Folie 8, die poröse Schicht 7 und der Kunststoffanteil des Trägermaterials 6 aus dem gleichen Polymer. Die poröse Schicht 7 wird aus dem treibmittelhaltigen Polymer beispielsweise durch Bestrahlung mit Mikrowellen-Energie hergestellt.

Der zwischen Unterwerkzeug 1 und Oberwerkzeug 3 eingebrachte Verbund 5 aus den lose aufeinanderliegenden Schichten 6, 7 und 8 wird in die in Figur 2 wiedergegebene Form des Verbundkörpers 9 gepreßt. In den Verbundkörper wird wie mit dem Bezugszeichen 10 angedeutet, Mikrowellenenergie durch das Werkzeug eingespeist. Zu diesem Zweck ist beim gezeigten Ausführungsbeispiel zumindest das Unterwerkzeug 1 mikrowellendurchlässig. Ebenso ist die das Trägermaterial 6 bildende Schicht mikrowellendurchlässig, während das Polymer der porösen Schicht 7 völlig oder weitgehend mikrowellenundurchlässig ist. Die Folie 8 wiederum ist MW-durchlässig. Durch diesen Aufbau des Verbundes wird die poröse Schicht 7 soweit aufgeheizt, daß sie zumindest oberflächig anschmilzt und Wärme aus der porösen Schicht in die Grenzfläche des Trägermaterials 6 und der Folie 8 abgeleitet wird, so daß diese allein durch Wärmeleitung an den Grenzflächen zur porösen Schicht 7 anschmelzen. Beim Abkühlvorgang entsteht dann ein fester Verbund aller drei Schichten.

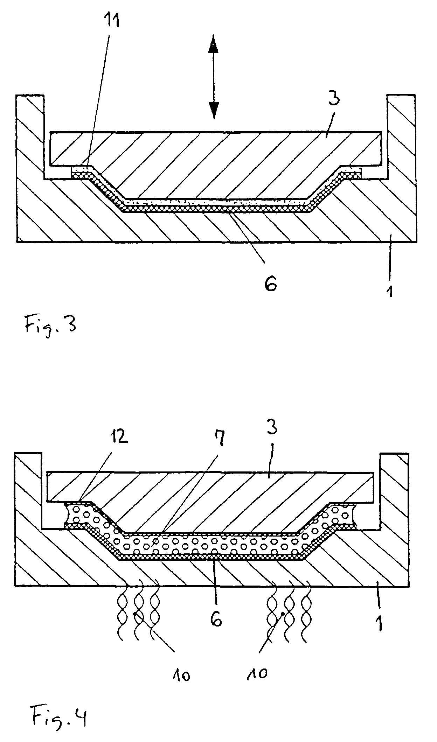

Bei dem Ausführungsbeispiel gemäß Figur 3 wird das Trägermaterial 6, das wiederum vorzugsweise aus GMT besteht, und ein in Form einer Schicht 11 aufgebrachtes, mit einem Treibmittel versetztes Polymer zwischen Unterwerkzeug 1 und Oberwerkzeug 3 vorgeformt. Während dieses Vorformprozesses liegen die Schichten noch lose aufeinander. Anschließend wird wiederum MW-Energie, wie bei 10 angedeutet, eingespeist. Das Polymer in der Schicht 11 ist wiederum MW-undurchlässig, so daß die Energie absorbiert wird und sich das Treibmittel zersetzt. Die Schicht schäumt auf, wobei das Oberwerkzeug 3 sukzessive angehoben wird, bis die endgültige Stärke der porösen Schicht 7 erreicht ist. Zugleich erfolgt in der zu Figur 1 und 2 beschriebenen Weise die Verbindung der porösen Schicht 7 mit dem Trägermaterial 6. Bei der MW-Absorption wird auch die dem Trägermaterial 6 gegenüberliegende Oberfläche der porösen Schicht 7 angeschmolzen, so daß sich an der Oberfläche des Profils 4 des Oberwerkzeugs 3 eine Integralhaut 12 ausbildet. Deren Bildung kann gegebenenfalls noch durch konventionelles Beheizen des Oberwerkzeugs 3 unterstützt werden.

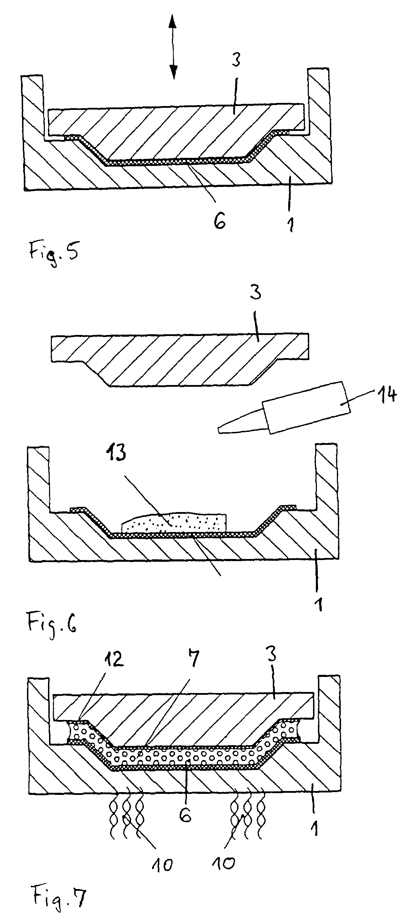

Bei dem Ausführungsbeispiel nach Figur 5 bis 7 wird nur das Trägermaterial 6 zwischen Unterwerkzeug 1 und Oberwerkzeug 3 vorgeformt. Nach Öffnen des Werkzeugs wird treibmittelhaltiges Polymer 13, z.B. direkt mittels eines Extruders 14, lose auf das Trägermaterial 6 aufgegeben. Anschließend wird die Form geschlossen, wobei das Oberwerkzeug 3 gegenüber dem Unterwerkzeug 1 etwa auf die endgültige Stärke des Verbundkörpers eingestellt wird. Durch Einspeisen von MW-Energie schäumt das Polymer 13 zu der porösen Schicht 7 auf und verteilt sich dabei gleichmäßig im Formspalt. Auch hierbei kann an der dem Trägermaterial gegenüberliegenden Seite eine Integralhaut 12 ausgebildet werden.

Für das Polymer der porösen Schicht 7 wird ein Treibmittel verwendet, dessen Zersetzungs- bzw. Verdampfungstemperatur zumindest etwas oberhalb des Schmelzpunktes des Polymers des Trägermaterials 6 und gegebenenfalls der Folie 8 liegt, so daß beim Aufschäumen des Polymers zumindest an den Grenzflächen zu den benachbarten Schichten soviel Wärme abgeleitet wird, daß diese oberflächig anschmelzen und nach dem Abkühlen ein fester Verbund erhalten wird.

Die poröse Schicht 7 kann auch durch Polymerpartikel gebildet sein, die in loser Schüttung in den Verbund eingebracht oder auf das Trägermaterial aufgebracht werden und beim Bestrahlen mit MW-Energie durch oberflächiges Anschmelzen miteinander und in der vorbeschriebenen Weise mit dem Trägermaterial verbunden werden. Zu diesem Zweck kann ein Polymer mit MW-absorbierenden Eigenschaften oder ein solches, dem ein entsprechendes Additiv zugegeben ist, verwendet werden. Statt dessen und vorzugsweise sind die Partikel mit einem MW-absorbierenden Mittel beschichtet. Die Partikel können ferner in expandierter oder vorexpandierter Form aufgebracht werden oder mit einem Treibmittel versehen sein und die Expansion erst beim Bestrahlen mit der MW-Energie erfolgen.

## Patentansprüche

1. Verfahren zur Herstellung von wenigstens zweischichtigen Verbundkörpern (9) mit einem ganz oder überwiegend aus einem Polymer bestehenden Trägermaterial (6) und einer mit diesem fest verbundenen porösen Schicht (7) aus einem geschäumten Polymer, indem ein mit einem Treibmittel versetztes Polymer mit Mikrowellen-Energie (10) auf die Schmelztemperatur des Polymers unter gleichzeitigem Zersetzen oder Verdampfen des Treibmittels erwärmt und der entstehende Polymerschaum mit dem Trägermaterial verbunden wird, **dadurch gekennzeichnet, daß** für das Trägermaterial (6) ein mikrowellendurchlässiges Polymer verwendet wird, während das mit dem Treibmittel versetzte Polymer mikrowellenabsorbierende Eigenschaften aufweist, daß das mit dem Treibmittel versetzte Polymer ausschließlich durch MW-Energie aufgeschäumt und zugleich oder anschließend mittels Mikrowellen-Energie (10) bis zum Anschmelzen des Trägermaterials (6) an seiner Grenzschicht zum aufgeschäumten Polymer durch Wärmeleitung aus diesem erhitzt wird, so daß nach dem Abkühlen ein fester Verbund von Trägermaterial (6) und geschäumtem Polymer erhalten wird.

2. Verfahren nach Anspruch 1, **dadurch gekennzeichnet, daß** das mit dem Treibmittel versetzte Polymer in losen Kontakt mit dem Trägermaterial (6) gebracht wird und der lose Verbund mit Mikrowellen-Energie (10) derart bestrahlt wird, daß unter gleichzeitigem Aufschäumen des Polymers das Trägermaterial (6) durch Wärmeleitung aus dem aufschäumenden Polymer anschmilzt und mit diesem verbunden wird.

3. Verfahren nach Anspruch 1 oder 2, **dadurch gekennzeichnet, daß** ein Treibmittel verwendet wird, dessen Zersetzungs- oder Verdampfungstemperatur oberhalb des Schmelztemperaturbereichs des für die poröse Schicht (7) verwendeten Polymers liegt.

4. Verfahren zur Herstellung von wenigstens zweischichtigen Verbundkörpern (9) mit einem ganz oder überwiegend aus einem Polymer bestehenden Trägermaterial (6) und einer mit dieser fest verbundenen porösen Schicht (7) aus einem geschäumten Polymer, **dadurch gekennzeichnet, daß** für das Trägermaterial (6) ein im wesentlichen mikrowellendurchlässiges Polymer und für die poröse Schicht (7) ein Polymer in Form von Partikeln mit mikrowellenabsorbierenden Eigenschaften verwendet wird, daß der lose Verbund (5) von Trägermaterial (6) und partikelförmigem Polymer mit Mikrowellen-Energie (10) bis zum unmittelbaren Verschmelzen der Partikel untereinander zumindest an ihrer Oberfläche sowie bis zum Anschmelzen des Trägermaterials (6) an seiner Grenzschicht zum partikelförmigen Polymer durch Wärmeleitung aus diesem bestrahlt wird, so daß nach dem Abkühlen ein fester Verbund von Trägermaterial (6) und poröser Schicht (7) aus untereinander verbundenen Polymerpartikeln erhalten wird.

5. Verfahren nach Anspruch 4, **dadurch gekennzeichnet, daß** für die poröse Schicht (7) mit einem Treibmittel versetzte Polymerpartikel verwendet und diese bei der Bestrahlung mit Mikrowellenenergie (10) expandiert werden.

6. Verfahren nach Anspruch 4 oder 5, **dadurch gekennzeichnet, daß** ein vorexpandiertes partikelförmiges Polymer verwendet und bei dem Bestrahlen mit Mikrowellenenergie (16) in die endgültige Form expandiert wird.

7. Verfahren nach einem der Ansprüche 1 bis 6, **dadurch gekennzeichnet, daß** für das Trägermaterial (6) und die poröse Schicht (7) gleiche Polymere verwendet werden.

8. Verfahren nach einem der Ansprüche 1 bis 7, **dadurch gekennzeichnet, daß** beim Bestrahlen mit MW-Energie (10) an den freien Oberflächen des Polymers der porösen Schicht (7) eine geschlossene Haut (12) (Integralhaut) gebildet wird.

9. Verfahren nach einem der Ansprüche 1 bis 8, **dadurch gekennzeichnet, daß** die freie Oberfläche des Polymers der porösen Schicht bereichsweise mit einer mikrowellenundurchlässigen Schicht abgedeckt wird.

10. Verfahren nach einem der Ansprüche 1 bis 9, **dadurch gekennzeichnet, daß** die freie Oberfläche des Polymers der porösen Schicht bereichsweise mit einer Schicht abgedeckt wird, die einen variierenden MW-Absorptionskoeffizient in der Ebene der Schicht aufweist.

11. Verfahren nach einem der Ansprüche 1 bis 10, **dadurch gekennzeichnet, daß** auf die freie Oberfläche des Polymers der porösen Schicht (7) eine weitere, im wesentlichen mikrowellendurchlässige Schicht (8), die ganz oder überwiegend aus dem gleichen Polymer besteht, aufgelegt und mit dem Polymer der porösen Schicht (7) beim Bestrahlen mit Mikrowellen-Energie (10) durch Anschmelzen seiner Grenzschicht mit dem Polymer der porösen Schicht (7) verbunden wird.

12. Verfahren nach Anspruch 11, **dadurch gekennzeichnet, daß** als weitere Schicht (8) eine Folie aus dem gleichen Polymer wie die poröse Schicht (7) verwendet wird.

13. Verfahren nach einem der Ansprüche 1 bis 12, **dadurch gekennzeichnet, daß** ein platten- oder folienförmiges Trägermaterial (6) verwendet wird.

14. Verfahren nach einem der Ansprüche 1 bis 13, **dadurch gekennzeichnet, daß** als Trägermaterial (6) ein Hohlkörper verwendet, dieser mit dem mit Treibmittel versetzten Polymer teilweise gefüllt und dieses anschließend durch Mikrowellen-Energie (10) aufgeschäumt wird.

15. Verfahren nach einem der Ansprüche 1 bis 14, **dadurch gekennzeichnet, daß** als Trägermaterial (6) GMT verwendet wird.

16. Verfahren nach einem der Ansprüche 1 bis 15, **dadurch gekennzeichnet, daß** der Verbundkörper (9) während der MW-Behandlung zugleich unter Druck geformt wird.

17. Verfahren nach einem der Ansprüche 1 bis 16, **dadurch gekennzeichnet, daß** das Trägermaterial (6) mit dem Polymer der porösen Schicht (7) und gegebenenfalls einer Deckschicht (8) unter Druck vorgeformt und anschließend der lose Verbund (5) mit MW-Energie (10) bestrahlt wird.

## Claims

1. Method for manufacturing at least two-layer composite bodies (9) with a carrier material (6), which comprises entirely or predominantly a polymer, and with a porous layer (7) which is combined securely with said carrier material and made of a foamed polymer, a polymer mixed with a foaming agent being heated by microwave energy (10) to the melting temperature of the polymer with simultaneous decomposition or evaporation of the foaming agent and the resultant polymer foam being combined with the carrier material, **characterised in that** a microwave-permeable polymer is used for the carrier material (6) whilst the polymer mixed with the foaming agent has microwave-absorbing properties, **in that** the polymer mixed with the foaming agent is foamed exclusively by MW energy and immediately or subsequently is heated by means of microwave energy (10) until melting of the carrier material (6) at its boundary layer onto the foamed polymer by heat introduction from the latter so that, after cooling, a solid composite of carrier material (6) and foamed polymer is obtained.

2. Method according to claim 1, **characterised in that** the polymer mixed with the foaming agent is brought into loose contact with the carrier material (6) and the loose composite is irradiated with microwave energy (10) in such a manner that, with simultaneous foaming of the polymer, the carrier material (6) melts out of the foaming polymer by heat introduction and is combined with the latter.

3. Method according to claim 1 or 2, **characterised in that** a foaming agent is used, the decomposition or evaporation temperature of which lies above the melting temperature range of the polymer used for the porous layer (7).

4. Method for producing at least two-layer composite bodies (9) with a carrier material comprising entirely or predominantly a polymer and with a porous layer (7) which is combined securely with said carrier material and made of a foamed polymer, **characterised in that** an essentially microwave-permeable polymer is used for the carrier material (6) and a polymer in the form of particles with microwave-absorbing properties is used for the porous layer (7), **in that** the loose composite (5) of carrier material (6) and particle-shaped polymer is irradiated with microwave energy (10) until direct melting of the particles amongst each other at least on their surface and until melting of the carrier material (6) at its boundary layer onto the particle-shaped polymer by heat introduction from the latter so that, after cooling, a solid composite of carrier material (6) and porous layer (7) is obtained from polymer particles which are combined with each other.

5. Method according to claim 4, **characterised in that** the polymer particles mixed with a foaming agent are used for the porous layer (7) and said polymer particles are expanded during irradiation with microwave energy (10).

6. Method according to claim 4 or 5, **characterised in that** a pre-expanded particle-shaped polymer is used and is expanded into the final form during irradiation with microwave energy (16).

7. Method according to one of the claims 1 to 6, **characterised in that** the same polymers are used for the carrier material (6) and the porous layer (7).

8. Method according to one of the claims 1 to 7, **characterised in that**, during irradiation with MW energy (10) on the free surfaces of the polymer of the porous layer (7), a closed skin (12) (integral skin) is formed.

9. Method according to one of the claims 1 to 8, **characterised in that** the free surface of the polymer of the porous layer is covered in regions with a microwave-permeable layer.

10. Method according to one of the claims 1 to 9, **characterised in that** the free surface of the polymer of the porous layer is covered in regions with a layer which has a varying MW absorption coefficient at the level of the layer.

11. Method according to one of the claims 1 to 10, **characterised in that** a further essentially microwave-permeable layer (8), which comprises entirely or predominantly the same polymer, is placed on the free surface of the polymer of the porous layer (7) and is combined with the polymer of the porous layer (7) during irradiation with microwave energy (10) by means of melting of its boundary layer with the polymer of the porous layer (7).

12. Method according to claim 11, **characterised in that** a film made of the same polymer as the porous layer (7) is used as further layer (8).

13. Method according to one of the claims 1 to 12, **characterised in that** a plate-shaped or film-shaped carrier material (6) is used.

14. Method according to one of the claims 1 to 13, **characterised in that** a hollow body is used as carrier material (6), the latter is partly filled with the polymer mixed with foaming agent and this is then foamed by microwave energy (10).

15. Method according to one of the claims 1 to 14, **characterised in that** GMT is used as carrier material (6).

16. Method according to one of the claims 1 to 15, **characterised in that** the composite body (9) is formed simultaneously under pressure during the MW treatment.

17. Method according to one of the claims 1 to 16, **characterised in that** the carrier material (6) with the polymer of the porous layer (7) and possibly a covering layer (8) is pre-formed under pressure and then the loose composite (5) is irradiated with MW energy (10).

## Revendications

1. Procédé de production de solides composites (9) ayant au moins deux couches avec un matériau de support (6) consistant totalement ou d'une manière prépondérante en un polymère et en une couche poreuse (7) assemblée avec celui-ci solidement, à base d'un polymère converti en mousse, procédé dans lequel un polymère mélangé à un agent moussant est chauffé avec l'énergie des micro-ondes (10) à la température de fusion de polymère avec décomposition ou évaporation simultanée de l'agent moussant, la mousse de polymère formée étant assemblée au matériau de support,
**caractérisé en ce que**
pour le matériau de support (6) on utilise un polymère transparent aux micro-ondes alors que le polymère additionné de l'agent moussant possède des propriétés absorbantes des micro-ondes, le polymère mélangé à l'agent moussant est converti en mousse exclusivement par l'énergie des MO, et en même temps ou ensuite est chauffé à l'aide de l'énergie des micro-ondes (10) jusqu'à la mise en fusion du matériau de support (6) à son interface en un polymère transformé en mousse par conduction de chaleur en dehors de celui-ci, de sorte qu'après refroidissement on obtienne un assemblage solide de matériau de support (6) et de polymère en mousse.

2. Procédé selon la revendication 1,
**caractérisé en ce que**
le polymère mélangé à un agent moussant, est mis en contact lâche avec le matériau de support (6) et l'assemblage lâche est irradié avec l'énergie des micro-ondes (10) afin que par mise en mousse simultanée du polymère, le matériau de support (6a) est mis en fusion par conduction de chaleur en dehors du polymère transformé en mousse, et est assemblé avec celui-ci.

3. Procédé selon la revendication 1 ou la revendication 2,
**caractérisé en ce qu'**
on utilise un agent moussant dont la température de décomposition ou d'évaporation se situe au-dessus de la zone de température de fusion du polymère utilisé pour la couche poreuse (7).

4. Procédé de production de solides composites (9) ayant au moins deux couches avec un matériau de support (6) consistant totalement ou d'une manière prépondérante en un polymère et en une couche poreuse (7) combinée solidement avec celui-ci, en un polymère converti en mousse,
**caractérisé en ce que**
pour le matériau de support (6) on utilise un polymère essentiellement perméable aux micro-ondes et pour la couche poreuse (7), un polymère sous forme de particules ayant des propriétés absorbantes vis-à-vis des micro-ondes, l'assemblage lâche (5) du matériau de support (6) et du polymère sous forme de particules est irradié avec l'énergie des micro-ondes (10) jusqu'à une fusion immédiate des particules réciproquement au moins à leur surface, ainsi que jusqu'à la mise en fusion du matériau de support (6) à son interface, en polymère sous forme de particules par conduction de la chaleur, à partir de celui-ci, de sorte qu'après refroidissement on obtienne un assemblage solide du matériau de support (6) et de la couche poreuse (7) à base de particules de polymères assemblés réciproquement.

5. Procédé selon la revendication 4,
**caractérisé en ce que**
pour la couche poreuse (7) on utilise des particules de polymère additionnée d'un agent moussant et qu'on effectue l'expansion de celle-ci par irradiation avec l'énergie des micro-ondes.

6. Procédé selon la revendication 4 ou la revendication 5,
**caractérisé en ce qu**
on utilise un polymère sous forme de particules, pré-expansé et qu'on expanse lors de l'irradiation avec l'énergie des micro-ondes (10) sous la forme finale.

7. Procédé selon l'une quelconque des revendications 1 à 6,
**caractérisé en ce qu'**
on utilise pour le matériau de support (6) et pour la couche poreuse (7) les mêmes polymères.

8. Procédé selon l'une quelconque des revendications 1 à 7,
**caractérisé en ce qu'**
on forme par irradiation avec l'énergie des MO (10) sur les surfaces libres du polymère de la couche poreuse (7) une pellicule continue (12) (pellicule intégrale).

9. Procédé selon l'une quelconque des revendications 1 à 8,
**caractérisé en ce qu'**
on recouvre la surface libre du polymère de la couche poreuse par zones, d'une couche imperméable aux micro-ondes.

10. Procédé selon l'une quelconque des revendications 1 à 9,
**caractérisé en ce que**
la surface libre du polymère de la couche poreuse est revêtue par zones avec une couche qui possède un coefficient variable d'absorption des MO dans le plan de la couche.

11. Procédé selon l'une quelconque des revendications 1 à 10,
**caractérisé en ce que**
sur la surface libre du polymère de la couche poreuse (7) on dispose une couche supplémentaire essentiellement perméable aux micro-ondes (8) qui consiste totalement ou d'une manière prépondérante en le même polymère et est assemblée avec le polymère de la couche poreuse (7) par irradiation avec l'énergie des micro-ondes (10) par mise en fusion de son interface avec le polymère de la couche poreuse (7).

12. Procédé selon la revendication 11,
**caractérisé en ce que**
comme couche supplémentaire (8) on utilise une feuille du même polymère que la couche poreuse (7).

13. Procédé selon l'une quelconque des revendications 1 à 12,
**caractérisé en ce qu'**
on utilise un matériau de support (6) en forme de plaque ou de feuille.

14. Procédé selon l'une quelconque des revendications 1 à 13,
**caractérisé en ce que**
comme matériau de support (6) on utilise un corps creux, on remplit partiellement celui-ci du polymère additionné d'agent moussant et on le transforme en mousse ensuite par l'énergie des micro-ondes (10).

15. Procédé selon l'une quelconque des revendications 1 à 14,
**caractérisé en ce qu'**
on utilise comme matériau de support (10) du GMT.

16. Procédé selon l'une quelconque des revendications 1 à 15,
**caractérisé en ce que**
pendant le traitement par les MO, le solide composite (9) est formé en même temps sous pression.

17. Procédé selon l'une quelconque des revendications 1 à 16,
**caractérisé en ce que**
le matériau de support (6) est préformé avec le polymère de la couche poreuse (7) et éventuellement une couche de couverture (8) sous pression et ensuite on irradie l'assemblage lâche avec l'énergie des MO (10).
